(19) Europäisches Patentamt
European Patent Office
Office européen des brevets

(11) EP 2 749 918 B1

(12) **EUROPEAN PATENT SPECIFICATION**

(45) Date of publication and mention
of the grant of the patent:
**20.06.2018  Bulletin 2018/25**

(51) Int Cl.:
***G02B 6/02*** *(2006.01)*  ***G01H 9/00*** *(2006.01)*
***G01D 5/353*** *(2006.01)*

(21) Application number: **13199730.6**

(22) Date of filing: **27.12.2013**

(54) **System for the detection of acoustic waves in the sea**

System zur Detektion von akustischen Wellen im Meer

Système pour la détection d'ondes acoustiques dans la mer

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2012  IT BO20120711**

(43) Date of publication of application:
**02.07.2014  Bulletin 2014/27**

(73) Proprietors:
• **Tecnav Systems s.r.l.**
  **57121 Livorno (IT)**
• **Dune S.r.l.**
  **00183 Roma (IT)**
• **Optosmart S.r.l.**
  **80121 Napoli (IT)**
• **Oceanix S.r.l.**
  **Napoli (IT)**

(72) Inventors:
• **Balzarini, Sergio**
  **80070 Bacoli (IT)**
• **Andreucci,Fabio**
  **00183 Roma (IT)**
• **Cusano, Andrea**
  **81100 Caserta (IT)**
• **Fevola, Franco**
  **80070 Monte de Procida (IT)**

(74) Representative: **Bongiovanni, Simone et al
Studio Torta S.p.A.
Via Viotti, 9
10121 Torino (IT)**

(56) References cited:
**US-A1- 2001 020 375    US-A1- 2008 123 467
US-A1- 2012 020 184**

EP 2 749 918 B1

**Description**

**Background to the Invention**

In general all sensors produced using the optical fibre technology, and in particular acoustic sensors, are characterised not only by high performance but also by intrinsic simplicity (no electronic components and therefore no power supply requirements) and reduced dimensions.

Optical fibre sensors can operate with very variable acoustic frequencies, but they are obviously optimised in a more limited band. Production of the acoustic antennae defining the spacing and number of sensors determines their use. Once the theatre of operations and therefore the environment, type of target, duration of the operation etc. have been defined, the parameters required for obtaining the "Optimal Acoustic System" are known. For example, in certain situations the Optimal System requires the use of low frequencies, whereas in other cases medium or high frequencies would be more suitable; in some cases, a towed system is useful, in others a fixed station on the seabed and so on.

If we add to these characteristics the possibility of creating the System at the time of use, set according to operational needs at that time, via a programming module that translates the operating parameters (propagation conditions, ambient characteristics, characteristics of the target etc.) into the antenna production parameters (work frequency, spacing of the sensors on the optical fibre, number of sensors, longitudinal dimension, etc.), it is possible to devise optimised and innovative antenna solutions with respect to the current systems which are designed for single specific applications. This flexible configuration has significant advantages with respect to the traditional systems in terms of both operation and cost.

Among the advantages considered fundamental in terms of both operation and cost, it is expedient to consider the possibility of devising the equipment, which comprises all the hardware components for obtaining and correctly releasing the antenna, with dimensions such as to be contained inside a container, so that it can be transported on board the various sea vessels according to operational requirements, and avoid the need for permanent installations which involve high costs and occupy significant space on the poop deck of the vessel. Currently the widespread contamination of nature is attributed to man's insensitiveness. Great attention must therefore be paid to human activities with environmental impact and the abolition or at least limited use of all equipment that is not bio-compatible should be a requirement. From this point of view, the possibility of selecting, at the time of production of the sensors, the biodegradable polymer that responds to the operational duration needs defined at the design stage is also fundamental. Optical fibre technology is extremely flexible for covering a wide range of operating situations; in addition, the use of appropriate materials allows the use of antennae with low cost and low environmental impact, which are therefore "expendable". US2012/0020184 discloses an acoustic underwater sensor, US2001/0020375 describes an apparatus for the manufacture of optical fiber Bragg gratings. US2008/0123467 discloses a seismic streamer array.

**Summary of the invention**

The need is therefore felt to devise a system for the detection of acoustic waves which allows real-time modification of the measurement characteristics according to the operating requirements at the time, with dimensions such as to be transported inside a container and with antenna which has a null environmental impact and is therefore "expendable". The present invention relates to a system for the detection of acoustic waves in the sea based on optical fibre technology as defined in claim 1. The system may include:

   1. An optoacoustical device (antenna) with expendable components for the monitoring of marine environments with great flexibility of use, both physical and operational:

   • Programmable frequency
   • Pre-determinable life via the biodegradable coating of the optical fibre.

   2. A device that comprises all the hardware components for obtaining and correctly releasing the antenna.
   3. A programming module that translates the operating parameters (propagation conditions, environmental characteristics, target characteristics etc.) into antenna production parameters (work frequency, spacing and dimension etc.). This module allows quasi-real time production of the sensorial curtain with the characteristics judged best for the operating requirements.

The entire system is conceived and produced with dimensions adapted to be contained inside a container so that it can be transported from one platform to another without particular limitations.

**Brief description of the drawings**

The invention will now be illustrated with reference to the accompanying figures which show a preferred non-limiting embodiment in which:

- figure 1 illustrates, in a schematic lateral view, a system for the detection of acoustic waves in the sea produced according to the teachings of the present invention and installed on a sea vessel;
- figure 2 illustrates, in a schematic overhead view, a system for the detection of acoustic waves in the sea produced according to the teachings of the present invention and installed on a sea vessel;
- figure 3 illustrates the "coil" sub-assembly which is the source of a multi-fibre cable of rough optical fibre, i.e. without coating, and ensures its unwinding. The coil also contains the connection function between the fixed part of the system and the part downstream of the rotating component;
- figure 4 illustrates an optical fibre acoustic sensor produced according to the system subject of the present invention;
- figure 5 illustrates the writing device, produced by means of a Positioner which serves to arrange the mask in a sequential manner on each fibre;
- figure 6 illustrates the device that mixes and casts the coating materials of the sensors and fibres compacted to produce the curtain;
- figure 7 illustrates the Polymerizer which is the unit adapted to obtain rapid and total hardening of the polymer released into the cable at each individual sensor;
- figure 8 illustrates the detector which processes the signals coming from the various sensors for detecting the characteristics (waveform and frequency) of acoustic waves W in the sea striking the antenna;
- figure 9 illustrates - schematically - the Programmer adapted to generate, in response to an operational requirement at that moment, piloting signals P1 and P2 for the writing device and/or the coating device of the individual sensors.

**Detailed disclosure of the invention**

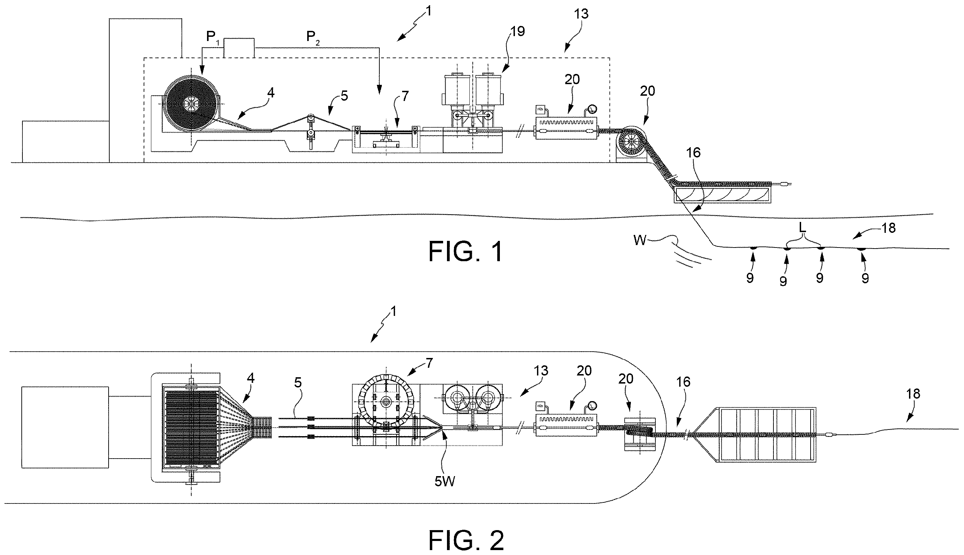

In figure 1 the number 1 indicates, as a whole, a system for the detection of acoustic waves in the sea produced according to the teachings of the present invention.

The system 1 comprises a plurality of units configured to be housed on board a sea vessel 2 (illustrated schematically) typically arranged on the rear part of the main deck. In particular, the system has dimensions, weights and shapes such as to be transportable in a container.

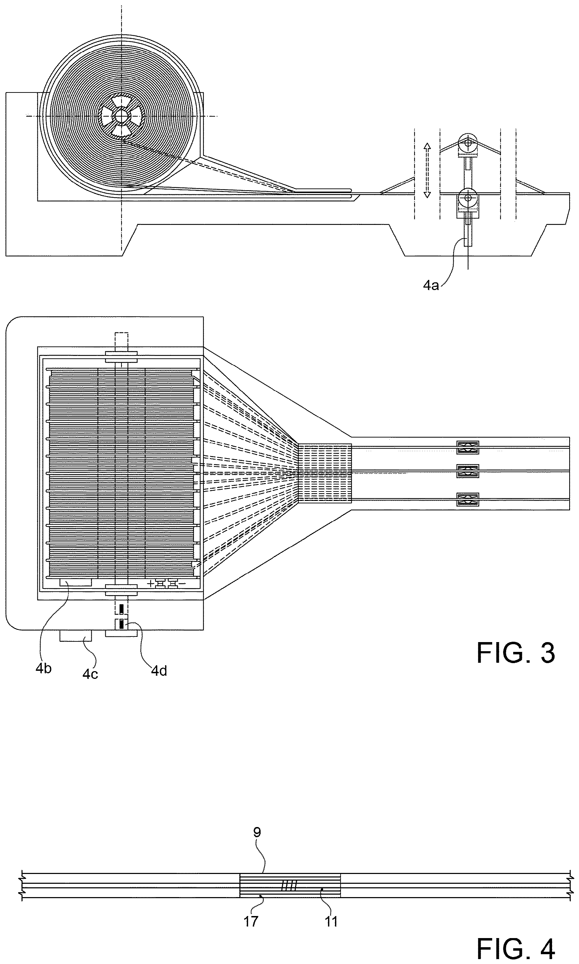

In further detail, the system 1 comprises a source coil 4 (figure 3) of a multi-fibre cable of rough optical fibre 5, i.e. each fibre is without coating and comprises only a core A and a cladding B (figure 4); the coil also contains a device 4a which ensures that the individual fibres unwind with the same tension and an optoelectronic module 4b which, partly rotating, ensures the functions of interrogation and decoding of the sensors. It is controlled by the homologous functions of the Programmer module 21 and allows functional connection of the fixed part 4c with the mobile part by means of a WI-FI system 4d thus avoiding complex electro-optical couplings.

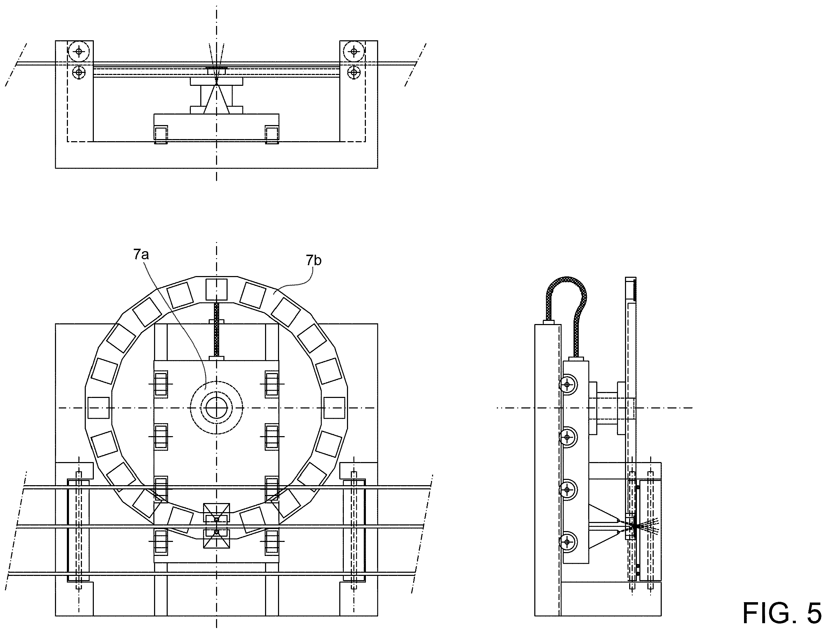

A writing device 7 (figure 5) receives as input the rough optical fibres 5 and generates as output a processed optical fibre cable 5w on which a plurality of optical sensors 9 are provided, spaced from one another along each optical fibre with an L/N° fibre pitch and appropriately scaled (figure 1). The coating of the fibres is the function that produces the sensitive elements in the positions and with the characteristics required by the System. The materials used for the above have the characteristics defined by the Programmer 21 so as to meet the operative live requirements (biodegradability requirement).

The writing device 7 is obtained by means of a Positioner 7a which serves to arrange the mask 7b on each fibre. The Positioner 7a receives the data from the Programmer 21 and selects the mask and the fibre taking into account that each mask must be used one single time on each fibre. The Sensitizer 7c is the device that produces the sensors. The function is obtained by operating a laser through the mask pre-defined on the point of the fibre where the Bragg cell must be obtained.

The laser source (not illustrated) is configured to provide in a permanent manner a periodic modulation of the refractive index of the core A of the optical fibre 5 obtaining, in each sensor 9, a diffraction grating 11 (figure 4) which acts - for the signals carried through the fibre 5 - as an optical filter in transmission and a selective reflector in reception centred on a resonance wavelength $\lambda B$ specific for each sensor 9. In this way, the writing device 7 is configured to obtain different resonance wavelengths $\lambda B$ for different sensors 9 belonging to the same processed optical fibre 5w.

The writing device 7 allows a high number of sensors 9 to be obtained on each optical fibre 5 under the following constraint: the resonance wavelengths of the various sensors are different from one another in order to prevent overlapping of the spectra which would make discrimination of the signals coming from the various diffraction gratings 11 impossible. In general, the wider the operating window in terms of wavelength, the higher the number of sensors that can be interrogated in a configuration in series.

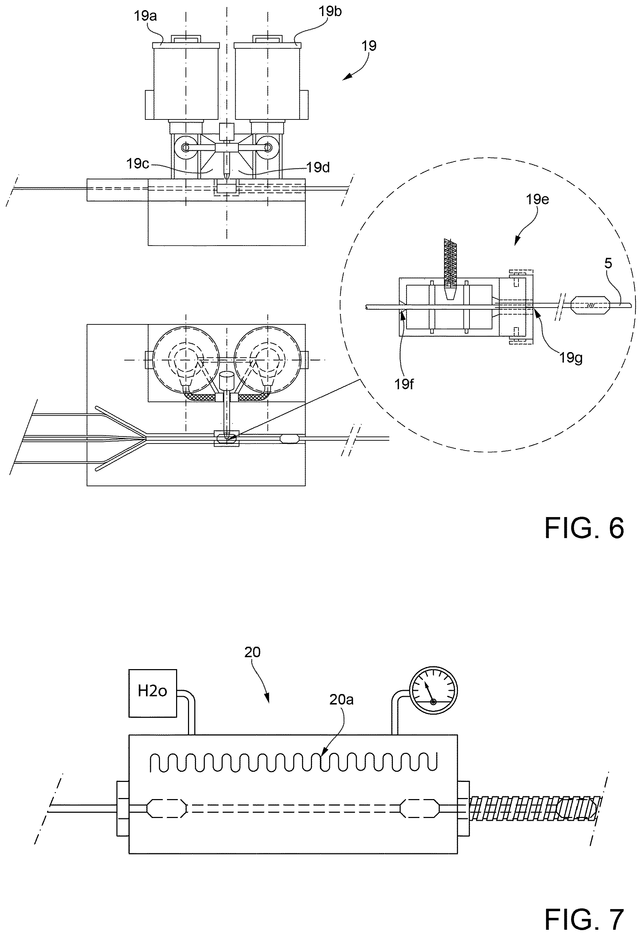

The system 1 furthermore comprises a Mixer (figure 6). This is a device that mixes and casts the coating materials of the sensors and fibres compacted to obtain the curtain. The casting is performed in a mould 6a which has a variable dimension outlet, adapted to coat the processed optical fibre, at the portion in which the grating 11 is provided (i.e. at each sensor), with a layer 17 (figure 4) of polymer with low elastic modulus in order to improve the sensitivity of the sensor to the hydrostatic pressure, modifying the original resonance wavelength λB of the diffraction grating 11 towards a shifted wavelength λB-sh.

The fibre Bragg gratings, although they show high performances for distributed (multipoint) temperature and deformation measurements, have a limited sensitivity as pressure transducers. Said limit is essentially due to the high Young modulus (dozens of GPa) of the optical fibre material (glass), which converts the effect of high pressures acting on the grating into small deformations. This aspect has proved to be the limiting factor for the use of said sensors for hydrostatic pressure measurements.

In recent years, research activity conducted by prestigious international institutes has shown that it is possible to improve the sensitivity in hydrostatic pressure by at least one order of magnitude by integrating the Bragg gratings with polymeric materials which have a low elastic modulus and are water-repellent. Furthermore, in acoustic terms the capability of said devices to measure acoustic vibrations and waves has been demonstrated. An optical fibre (and therefore a Bragg grating) generally has a diameter of 250 micron and the frequency limit is essentially determined by the length of the device which today can be easily reduced to a few millimetres. It should be noted that there is a deterioration in the performances of the device for ultrasonic measurements when the high acoustic frequency makes the acoustic wavelengths comparable with the length of the grating.

In recent experimental tests performed in professional tanks, acoustic sensors were tested consisting of FBG coated with two different polymeric materials, according to a cylindrical geometry. The FBG is positioned at the centre of the coating cylinder, provided at the ends with two tapers which act as a mechanical connection between the coating and the optical fibre (coupling cones).

To obtain the coating of the Bragg sensors, a polyurethane and/or an epoxy resin were used, both thermosetting. Said resins, in fact, meet the various requirements for the application in question, i.e. low Young modulus and Poisson coefficient values, high water-repellence, low acoustic damping coefficient, optimal adhesion to the fibre, ease of processing and low cost.

The experimental tests performed, by way of example and not limited to non-biodegradable resin types, on a DAMIVAL sensor, dimensions 5 mm × 30 mm, and on an ARALDITE sensor, dimensions 5 mm × 40 mm, in the frequency range 4÷35 kHz have shown that the sensors with polyurethane resin coating (DAMIVAL) provide maximum responses at low frequencies (< 10 kHz), whereas the sensors with epoxy resin coating (ARALDITE) have maximum sensitivity at high frequencies (> 20 kHz).

Table 1 summarises the materials and physical dimensions used in the example for the production of acoustic sensors operating in two different frequency ranges.

**Table 1:** Specifications of the sensors used

| Material | Commercial name | Diameter D (mm) | Length L (mm) | Band (kHz) |
|---|---|---|---|---|
| Epoxy resin | ARALDITE | 5 | 30 | 4÷10 |
| Polyurethane resin | DAMIVAL | 5 | 40 | 25÷35 |

Production of the sensors entails the use of a mould into which the mixture formed by the resin and the relative hardener is injected. In particular, a variable-geometry mould will be used, made of Teflon, consisting of two halves which will define the final shape of the sensors.

Subsequently the system 1 comprises the Polymerizer 20 which is the unit (figure 7) arranged downstream of the head 19 and adapted to obtain rapid and total hardening of the polymer released by the head 19. It can be obtained by control of the temperature-humidity-pressure and time, if necessary also via the use of appropriate catalysts and the emission of ultraviolet rays.

The devices illustrated above are configured to operate sequentially, i.e. the optical fibre which is released by the source 4 proceeds sequentially to the writing device 7 to obtain the diffraction gratings 11 and then to the coating device 13 so that each acoustic sensor of the optical fibre acoustic curtain 16 is produced by means of a continuous process.

Lastly, the system 1 comprises a deployment device 20 (also of known type and not further illustrated, for example obtained by a winch) mounted on the sea vessel 2 and adapted to release the optical fibre acoustic curtain 16 into the sea.

The deployment device 20 allows release of the optical fibre sensor into the sea at the end of its production process, thus obtaining an antenna 18, the length of which increases as the production process proceeds. The antenna 18 can reach considerable lengths (a few dozen kilometres). When the antenna 18 has reached the pre-set length, the production process of the system 1 is interrupted.

At the end of use of the antenna 18 the optical fibre is cut and the antenna 18 is released into the sea. The environmental impact of said release is substantially null since, as described, the optical fibre is made of silicon (a non-polluting material) while the layer 17 is made of biodegradable polymers which decompose in the seawater.

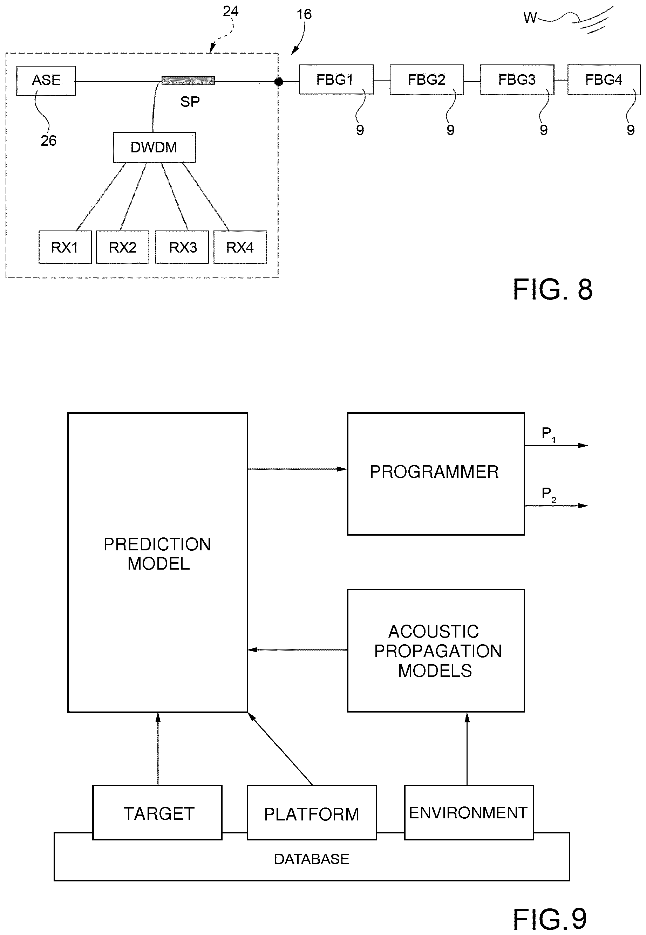

The antenna 18 is used jointly with a detection system 24 for detecting underwater acoustic waves (figure 8) which uses an optical generator 26 which supplies an ASE wide-band signal at the input of the optical fibre acoustic curtain 16; a detector processes the signals coming from the various sensors 9 to detect the characteristics (waveform and frequency) of acoustic waves W detected in the sea by the antenna 18.

The final architecture of the interrogator obviously depends on the number of sensors to be adopted: although one single source is used, to increase the number of sensors that can be interrogated, the same number of reception blocks (RX) as the number of sensors to be added must be inserted, in addition to a DWDM filter, i.e. a device that performs "gating" of the spectrum reflected by the connected sensors, dividing it into as many sub-bands as there are sensors, each one centred around the wavelength of the corresponding grating. At every output of the DWDM, the reflected spectrum corresponding to a given sensor is returned, i.e. at a given Bragg wavelength. With the devices currently on the market it is possible to obtain modules for the simultaneous interrogation of 4 sensors, as schematized (figure 8).

Using a splitter $1 \times 4$ downstream of the first splitter, 4 DWDM $1 \times 4$ filters and replicating the reception modules, an instrument can be obtained for the simultaneous interrogation of 16 sensors located on one or more fibres, maintaining relatively limited complexity, overall dimensions and cost. For arrays with more than 16 sensors, on the other hand, it is preferable to use several interrogators, since it is more advantageous in terms of both complexity and final overall dimensions.

As mentioned above, the diffraction gratings 11 act as filters integrated in the fibre capable of reflecting the incident radiation at a well-defined resonance wavelength $\lambda_B$ which is linked to the physical characteristics of the fibre in the region of the grating and to its geometry according to the expression:

$$\lambda_B = 2n_{eff}\Lambda$$

where $n_{eff}$ is the effective refractive index relative to the propagating mode and $\Lambda$ is the spatial period of the grating 11.

Every variation in the geometry of the fibre or in the refractive index induced mechanically by acoustic waves transmitted in water modifies the coupling wavelength; by measuring and processing said wavelength variation it is possible to trace back the waveform of the acoustic wave W striking the fibre.

According to the present invention, the system 1 comprises a Programmer device 21 adapted to generate, in response to an operating requirement at that moment (figure 9), piloting signals P1, P2 for the writing device 7 and/or the coating device 13 to modify the optical characteristics of the optical fibre acoustic curtain 16.

In this way it is possible to set in real time the characteristics of the sensors of the curtain 16 and consequently obtain an antenna 18 which follows said setting. It is therefore possible to obtain an antenna 18 which responds to the instantaneous conditions of use. Furthermore, following modifications in the conditions of use at that moment, a new antenna 18 can be obtained which responds to said modified scenario. As far as the patent applicant knows, there are no known systems that offer such flexibility.

Furthermore, the antenna 18 obtained thanks to the intrinsic characteristics of the optical fibre has a high immunity to electromagnetic interferences, high flexibility and lightness and low attenuation of the signal carried (the antenna 18 can be as long as 20 kilometres).

The intrinsic safety of the antenna 18 is also high thanks to the low chemical interaction of the fibre with other materials and to the low level of power applied in input.

Furthermore, the antenna 18 does not constitute in itself a source of electromagnetic interferences and is not subject to them. Said antenna 18 can therefore be advantageously used to perform measurements in hostile environments in terms of electromagnetic pollution (for example, near high intensity field sources) or for measurements for which electromagnetic emissions by the measurement system are not tolerated.

Lastly, the optical sensors 9 are characterised by high stability over time since, as said, they are passive components. Once obtained by the writing device 7, the optical sensors 9 can potentially function for years without suffering the usual deviations due to ageing of the materials, corrosion and the action of atmospheric agents to which the traditional electro-mechanical sensors are subject. Furthermore, the optical sensors 9 do not require recalibrations and therefore the measurements taken in different periods are always coherent and correlated to one another and periodical replacement of the sensors is not necessary.

In particular, the Programmer 21 is adapted to act on the coating device 13 to adjust the physical characteristics of the coating layer 17 (in particular the composition of the mix of biodegradable polymers, which is used to coat the sensor 9).

## Claims

1. A system for the detection of acoustic waves in the sea comprising the following units configured to be housed on board of a sea vessel:

   - a source (4) of an optical fiber cable without coating (5) each comprising a core (A) and a cladding (B);
   - writing means (7) arranged to receive as input said optical fiber cable and arranged to generate as output a processed optical fiber curtain (5w) on which a plurality of optical sensors (9) are made spaced from one another along each optical fiber with a L/N° fibers pitch; said writing means (7) being configured for making a periodic modulation of the refractive index of the core (A) in a permanent way, providing, for each sensor, a diffraction grating (11) that acts as an optical filter in transmission and a selective reflector centered on a resonance wavelength $\lambda$B specific for each sensor; said writing device (7) being thus configured to obtain different resonance wavelengths $\lambda$B for different sensors belonging to the same processed optical fiber;
   - overcoating means (13) arranged to receive as input said processed optical fiber curtain (5w) and arranged to generate as output an optical fiber acoustic sensor (16); said overcoating means (13) being adapted to cover the portion of each sensor with at least one polymer layer with a low elastic modulus (17) in order to improve the sensitivity of the sensor to the hydrostatic pressure by modifying the original resonance wavelength $\lambda$B of the refractive grating towards a shifted wavelength $\lambda$B-sh;
   - polymerization means (20) of the overcoating of the sensors; said polymerization means (20) being adapted to obtain a rapid total hardening of the polymer released from the head (19);
   - deployment means (20) suitable for being carried by the said sea vessel and adapted to release the optical fiber acoustic curtain into the sea;
   - a detection system (24) of subaqueous acoustic waves comprising generating means (26) to supply a wideband optical signal to said optical fiber acoustic sensor (16) and detection means to process the signals coming from the various sensors (9) for the detection of the characteristics of acoustic waves detected in the sea; said optical fiber curtain arranged to be jointly used with said detection system (24);
   - said system further comprising programming means (21) adapted to generate, in response to an operational need of the moment, piloting signals (P1, P2) of at least one of said writing means (7) and overcoating means (13) to change the optical characteristics of the optical fiber acoustic sensor according to said operational need.

2. The system for the detection of acoustic waves in the sea according to claim 1, **characterized by** having dimensions, weights and shapes such as to be transportable in a container.

3. The system according to claim 1 or 2, wherein said programming means are adapted to modify the physical characteristics of the overcoating layer (17) to modify, for each sensor, the resonance wavelength $\lambda$B of the refractive grating towards a shifted wavelength $\lambda$B-sh.

4. The system according to claim 3, wherein said programming means are adapted to modify the thickness of the layer which covers said sensor.

5. The system according to claim 3, wherein said programming means are adapted to modify the composition of the polymers mixture that is used to cover the sensor.

6. The system according to any preceding claims, wherein said programming means are adapted to adjust the pitch L according to the operational need of the moment.

## Patentansprüche

1. System zur Erfassung von Schallwellen im Meer, umfassend die folgenden Einheiten, die ausgelegt sind, an Bord eines Seeschiffs aufgenommen zu sein:

   - eine Quelle (4) eines Lichtwellenleiterkabels ohne Beschichtung (5), das jeweils einen Kern (A) und einen Mantel (B) umfasst;
   - Schreibmittel (7), die angeordnet sind, als Eingang das Lichtwellenleiterkabel zu empfangen, und die angeordnet sind, als Ausgang einen verarbeiteten Lichtwellenleitervorhang (5w) zu erzeugen, auf dem eine Vielzahl von optischen Sensoren (9) hergestellt sind, die voneinander entlang jedes Lichtwellenleiters mit einem L/N°-Faserabstand beabstandet sind; wobei die Schreibmittel (7) ausgelegt sind, eine periodische Modulation des Brechungsindex des Kerns (A) auf dauerhafte Weise herzustellen, wobei für jeden Sensor ein Beugungsgitter (11), das als optischer Filter bei der Übertragung fungiert, und ein selektiver Reflektor, der auf eine für jeden Sensor spezifische Resonanzwellenlänge $\lambda B$ zentriert ist, bereitgestellt wird; wobei die Schreibmittel (7) somit ausgelegt sind, verschiedene Resonanzwellenlängen $\lambda B$ für verschiedene Sensoren zu erlangen, die zu dem gleichen verarbeiteten Lichtwellenleiter gehören;

- Deckbeschichtungsmittel (13), die angeordnet sind, als Eingang den verarbeiteten Lichtwellenleitervorhang (5w) zu empfangen, und die angeordnet sind, als Ausgang einen Lichtwellenleiterschallsensor (16) zu erzeugen; wobei die Deckbeschichtungsmittel (13) ausgelegt sind, den Abschnitt jedes Sensors mit wenigstens einer Polymerschicht mit einem niedrigen Elastizitätsmodul (17) zu überziehen, um die Empfindlichkeit des Sensors in Bezug auf den hydrostatischen Druck durch Ändern der ursprünglichen Resonanzwellenlänge $\lambda B$ des Beugungsgitters zu einer verschobenen Wellenlänge $\lambda B\text{-}sh$ zu verbessern;

- Polymerisationsmittel (20) der Deckbeschichtung der Sensoren; wobei die Polymerisationsmittel (20) ausgelegt sind, eine schnelle Gesamtaushärtung des von dem Kopf (19) freigesetzten Polymers zu erlangen;

- Ausbringungsmittel (20), die geeignet sind, von dem Seeschiff transportiert zu werden und ausgelegt sind, den Lichtwellenleiterschallvorhang in das Meer auszubringen;

- ein Erfassungssystem (24) für Unterwasserschallwellen, umfassend Erzeugungsmittel (26), um ein optisches Breitbandsignal an den Lichtwellenschallsensor (16) zu liefern und Erfassungsmittel, um die von den verschiedenen Sensoren (9) kommenden Signale zur Erfassung der Eigenschaften von Schallwellen, die in dem Meer erfasst wurden, zu verarbeiten; wobei der Lichtwellenleitervorhang angeordnet ist, um zusammen mit dem Erfassungssystem (24) verwendet zu werden;

- das System, ferner umfassend Programmierungsmittel (21), die ausgelegt sind, als Reaktion auf eine operative Notwendigkeit in dem Moment, Steuersignale (P1, P2) von wenigstens einem der Schreibmittel (7) und der Deckbeschichtungsmittel (13) zu erzeugen, um die optischen Eigenschaften des Lichtwellenleiterschallsensors gemäß der operativen Notwendigkeit zu verändern.

2. System zur Erfassung von Schallwellen im Meer nach Anspruch 1, **dadurch gekennzeichnet, dass** es derartige Abmessungen, Gewichte und Formen aufweist, dass es in einem Container transportierbar ist.

3. System nach Anspruch 1 oder 2, wobei die Programmierungsmittel ausgelegt sind, die physischen Eigenschaften der Deckbeschichtungsschicht (17) zu ändern, um für jeden Sensor die Resonanzwellenlänge $\lambda B$ des Beugungsgitters zu einer verschobenen Wellenlänge $\lambda B\text{-}sh$ zu ändern.

4. System nach Anspruch 3, wobei die Programmierungsmittel ausgelegt sind, die Dicke der Schicht, die den Sensor überzieht, zu ändern.

5. System nach Anspruch 3, wobei die Programmierungsmittel ausgelegt sind, die Zusammensetzung der Polymermischung zu ändern, die verwendet wird, um den Sensor zu überziehen.

6. System nach einem der vorstehenden Ansprüche, wobei die Programmierungsmittel ausgelegt sind, den Abstand L gemäß der operativen Notwendigkeit des Moments anzupassen.

**Revendications**

1. Système de détection d'ondes acoustiques dans la mer comprenant les modules suivants, configurés pour être logés à bord d'un navire de mer :

- une source (4) d'un câble de fibres optiques sans revêtement (5), chacune comprenant un coeur (A) et une gaine (B) ;
- des moyens d'écriture (7) disposés de manière à recevoir en entrée ledit câble de fibres optiques et disposés de manière à produire en sortie un rideau de fibres optiques transformées (5w) sur lesquelles sont réalisés plusieurs capteurs optiques (9), espacés les uns des autres le long de chaque fibre optique d'un pas de fibres de L/N° ; lesdits moyens d'écriture (7) étant configurés pour réaliser une modulation périodique de l'indice de réfraction du coeur (A) de façon permanente, fournissant, pour chaque capteur, un réseau de diffraction (11) qui agit comme un filtre optique en transmission et un réflecteur sélectif centré sur une longueur d'onde de résonance AB spécifique à chaque capteur ; ledit dispositif d'écriture (7) étant ainsi configuré pour obtenir différentes longueurs d'onde de résonance λB pour différents capteurs appartenant à la même fibre optique transformée ;

- des moyens d'enrobage (13) disposés de manière à recevoir en entrée ledit rideau de fibres optiques transformées (5w) et disposés de manière à produire en sortie un capteur acoustique de fibres optiques (16) ; lesdits moyens d'enrobage (13) étant adaptés pour recouvrir la partie de chaque capteur d'au moins une couche de polymère à faible module d'élasticité (17) pour améliorer la sensibilité du capteur à la pression hydrostatique en modifiant la longueur d'onde de résonance initiale λB du réseau de réfraction vers une longueur d'onde décalée λB-sh ;

- des moyens de polymérisation (20) de l'enrobage des capteurs ; lesdits moyens de polymérisation (20) étant adaptés pour obtenir un durcissement total rapide du polymère libéré par la tête (19);

- des moyens de déploiement (20) adaptés pour être transportés par ledit navire de mer et adaptés pour libérer le rideau acoustique de fibres optiques dans la mer;

- un système de détection (24) d'ondes acoustiques sous-marines comprenant des moyens de génération (26) pour fournir un signal optique à large bande audit capteur acoustique de fibres optiques (16) et des moyens de détection pour traiter les signaux en provenance des divers capteurs (9) pour la détection des caractéristiques d'ondes acoustiques détectées dans la mer ; ledit rideau de fibres optiques étant disposé de manière à être utilisé conjointement avec ledit système de détection (24);

- ledit système comprenant en outre des moyens de programmation (21) adaptés pour produire, en réponse à un besoin opérationnel du moment, des signaux de pilotage (P1, P2) d'au moins un des moyens d'écriture (7) et des moyens d'enrobage (13) pour modifier les caractéristiques optiques du capteur acoustique de fibres optiques selon ledit besoin opérationnel.

2.  Système de détection d'ondes acoustiques dans la mer selon la revendication 1, **caractérisé en ce que** ses dimensions, poids et formes lui permettent d'être transportable dans un conteneur.

3.  Système selon la revendication 1 ou 2, dans lequel lesdits moyens de programmation sont adaptés pour modifier les caractéristiques physiques de la couche d'enrobage (17) pour modifier, pour chaque capteur, la longueur d'onde de résonance λB du réseau de réfraction vers une longueur d'onde décalée λB-sh.

4.  Système selon la revendication 3, dans lequel lesdits moyens de programmation sont adaptés pour modifier l'épaisseur de la couche qui couvre chaque capteur.

5.  Système selon la revendication 3, dans lequel lesdits moyens de programmation sont adaptés pour modifier la composition du mélange de polymères utilisé pour couvrir ledit capteur.

6.  Système selon l'une quelconque des revendications précédentes, dans lequel lesdits moyens de programmation sont adaptés pour ajuster le pas L selon le besoin opérationnel du moment.

**FIG. 1**

**FIG. 2**

EP 2 749 918 B1

FIG. 3

FIG. 4

EP 2 749 918 B1

FIG. 5

FIG. 6

FIG. 7

**FIG. 8**

**FIG.9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120020184 A
- US 20010020375 A
- US 20080123467 A